# EUROPEAN PATENT SPECIFICATION

(11) **EP 1 142 334 B1**
(45) Date of publication and mention of the grant of the patent: **26.03.2003**
(21) Application number: 99962452.1
(22) Date of filing: 23.12.1999
(51) Int. Cl.: H04N 7/16, H04N 7/173

(54) **ELECTRONIC PROGRAMME BREAK REPLACEMENT SYSTEM**
ELEKTRONISCHES PROGRAMMUNTERBRECHUNGSERSATZSYSTEM
SYSTEME ELECTRONIQUE DE REMPLACEMENT DES COUPURES DE PROGRAMME

(30) Priority: 23.12.1998 GB 9828585
(43) Date of publication of application: 10.10.2001
(73) Proprietor: NTL Group Limited, Hook, Hampshire RG27 9UP (GB)
(72) Inventor: LANG, Jack Arnold, Cambridge, CB3 7NU, United Kingdom (GB); STRICK, Michael, Hook, Hampshire RG27 9UP (GB)
(74) Representative: Martin, Philip John
(86) International application number: GB9904416
(87) International publication number: WO00040025

(56) References cited:
- EP-A- 0 536 628
- US-A- 5 600 573

## Description

The present invention generally relates to systems for the management of programmes for home entertainment devices such as televisions. More particularly it is concerned with apparatus, methods and software for replacing breaks in such programmes.

Until recently conventional televisions have been able to receive only a relatively limited number of channels of programmes. Typically terrestrial television broadcasting has provided 4 or 5 channels, satellite broadcasting of the order of a dozen channels and cable television broadcasting a few tens of channels. With the advent of new forms of programme delivery such as digital terrestrial television (DTT). digital satellite television, web casting - delivery of programmes over the Internet - and video-on-demand (VOD) and near video-on-demand (NVOD) the number of available television channels is predicted to grow dramatically. Consumers will be able to choose from many thousands of programmes or programme clips, which could include daily video magazines, regularly updated news from hundreds of sources around the globe, music tracks and videos, games and films. Newer PC-TVs and set-top-boxes (STBs) have the ability to store programmes on an internal hard disk for viewing later and to access web-cast video over the Internet, as well as having the capability to receive many hundreds of channels of broadcast material and NVOD movies. Thus consumers will be faced with an overwhelming choice of viewing.

Television viewers exhibit both "push" and "pull" behaviour. In push behaviour a passive viewer selects a channel, typically by editorial style much as one might choose a newspaper, and is essentially passive thereafter. Pull behaviour is where a viewer deliberately chooses or "pulls" a desired programme, for example a video, soap, sporting fixture or well-advertised/trailed programme. Viewers may even pay for such material.

The advent of intelligent television receivers and set-top boxes (STBs) with inbuilt storage and processing power allow intelligent switching of channels between and within TV programmes. These developments may have a radical effect on the TV paradigm, and in particular negate the assumption that the passive viewer is captured by a particular broadcasting channel.

EP-A-0 878 964 describes a virtual information selection system with means for identifying and learning preferences of an information consumer. An advertising mode is utilised for providing information to consumers in which they have specified a particular interest. EP-A-0 772 360 describes video data receiving apparatus, video data transmitting apparatus and a broadcasting system. Programme data is outputted whilst appropriately inserting stored commercials. EP-A-0 536 628 describes selection of compressed televisions signals from single channel allocation based on viewer characteristics. US 5,715,400 describes a system and method for providing merchant information and establishing links to merchants while presenting a movie. EP-A-0 536 628 describes a system in which compressed video including a plurality of commercials is provided on a single RF channel with a main programme. At a subscriber receiver one of the commercials is displayed based upon viewer characteristics. US 5,600,573 describes an operations centre that organises and packages television programmes for transmission in a television delivery system. A scheduler component creates a programme line up into which advertisements are inserted. After central scheduling or packaging different groups of programmes are sent to different cable headends.

The various aspects of the present invention are aimed at providing a viewer with programme and supplementary programme information which is potentially better aligned with what the user would like or be interested to see.

The invention is set out in the independent claims. There is provided an apparatus, and a corresponding method, for interfacing to/operating with a home entertainment device (HED) for providing the home entertainment device with a modified programme channel. The modified programme channel comprises a schedule of programmes on a first programme channel, having modified parts within and/or between the programmes. The system comprises: A first programme reception device to receive the programmes on the programme channel; means to receive, locally to the HED, supplementary programme material; output means, coupled to the first programme reception device and to the means to receive supplementary programme material, to output the scheduled programmes and supplementary programme material to the home entertainment device; programme event detection means (such as a clock and/or event handler), coupled to the programme reception device, to detect an event in a programme; and switching means, responsive to the programme event detection means to switch the output from the programme to the supplementary programme material. The source of supplementary programme material is different to the first programme channel. Preferably the home entertainment device is a television and preferably the event is a break or interruption in a programme..

This allows delivery of advertising material by a route different to that of the programme material, and allows personalised advertisements, chosen according to viewer preferences and demographics to be delivered, possibly from a third party source.

The system allows a user or programme or service provider to replace programme breaks or interruptions due to commercial advertising or the intervention of other programmes, with material which is supplementary to the programmes, such as targeted advertising. Where the system comprises local storage such programme breaks may also, if desired, be eliminated entirely by displaying a time-delayed version of the programme channel. The system may include a clock for timed control of switching.

The apparatus and method can advantageously be used in the context of apparatus and/or methods for providing a home entertainment device with a virtual or personal channel. Such a virtual or "personal" channel may comprise a sequence of programmes from multiple programme sources, chosen according to the user's taste or specifications. The system and methods described allow further tailoring of such a virtual channel to more closely match a specific user's habits or requirements.

Advantageously sources of supplementary programme material include NVOD video, material available via the Internet, and locally stored supplementary programme material.

A source of supplementary programme material may be predefined, for example, in firmware by a set top box supplier or by a service provider downloading source definition information to a user. Alternatively the source of supplementary programme material is selected automatically in response to collected and locally or remotely stored user preference or descriptor information.

A user descriptor can be based upon user input parameters, user identity data and/or the user's recent viewing history. A separate, user-specific advertisement stream may also be included in the personal channel schedule, either timed according to the user's preferences or automatically, for example between programmes.

The system preferably stores a user description and the supplementary programme source can be selected in response to this so that a personal channel can be switched to a defined advertising or programme break source, for example, to deliver more specifically targeted or personalised advertising. If a previously stored programme is being viewed the apparatus can be arranged to allow the user the option of skipping over a programme or commercial break.

Preferably the source of supplementary programme material comprises the programme reception device and the switching means switches the programme reception device from the programme channel to a second channel to receive the supplementary programme material. Alternatively the source of supplementary programme material comprises a second programme reception device and the switching means switches to selectively couple one of the programme reception devices to the output means. The switching means may be further responsive to a programme reception device to switch back from the supplementary programme material to the programme.

These and other aspects of the invention will now be described, by way of example only, with reference to the accompanying drawings in which:
Figure 1 shows a block diagram of apparatus embodying the present invention;
Figure 2 conceptually illustrates the concept of a virtual channel;
Figure 3 shows an on-screen electronic programme guide for a virtual channel;
Figure 4 shows a relational database for storing programme data;
Figure 5 shows a user interface for searching the database of Figure 4;
Figure 6 shows a block diagram of software modules for an electronic programme scheduling system;
Figure 7 shows, schematically, parts of a user interface; and
Figure 8 shows apparatus for programme break replacement.

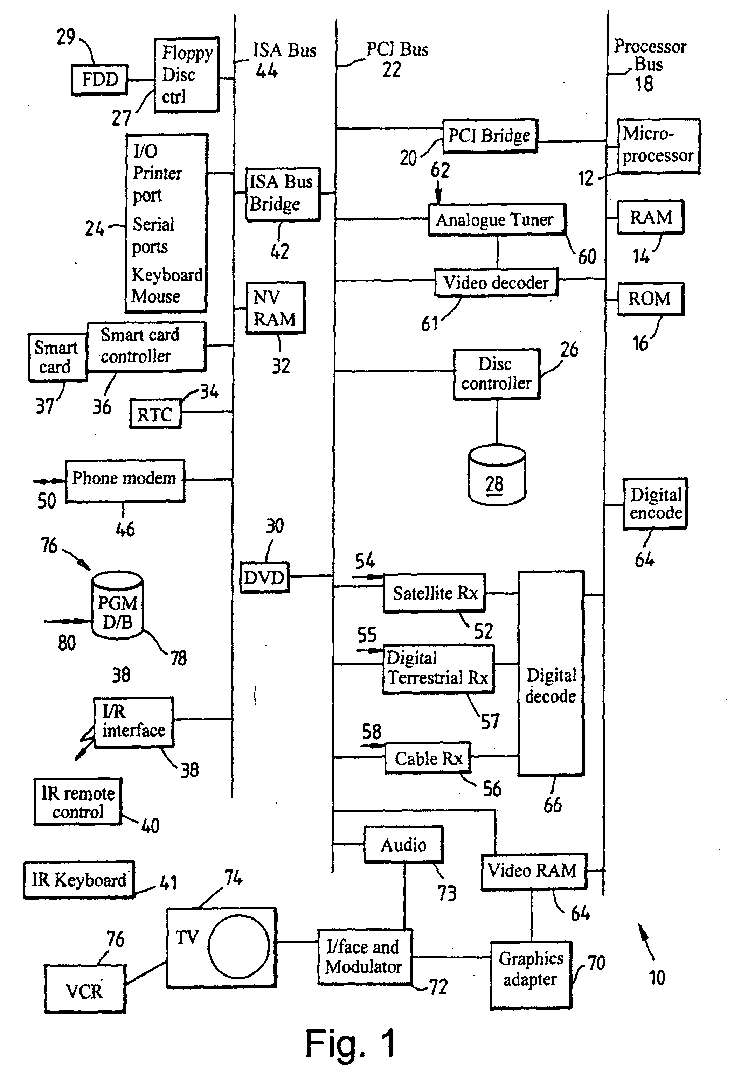

Figure 1 shows one example of electronic programme guide (EPG) apparatus which is suitable for providing a home entertainment device, such as a television, with a virtual or personal channel. The programme break replacement system will generally operate in the context of such a system which will therefore be described in detail. An EPG is, generally speaking, an application resident on a set top box designed to aid the viewer in the navigation of and selection from broadcast material available in a digital TV environment. A virtual personal channel comprises, generally speaking a preferably seamless schedule of material from any available broadcast channels, automatically selected for maximum relevance to a set of parameters defined by the viewer. A set top box automatically re-tunes to each broadcast channel as required, providing the effect of a single channel.

Logically the apparatus of Figure 1 is located between a programme source such as a terrestrial television programme transmitter and a television receiver; physically it may be incorporated within a television set. In outline it is based upon hardware corresponding to a conventional personal computer system with the addition of components for television programme reception and processing and modifications to enable the computer to be embedded in a conventional set top box (STB) with infrared remote control. Much of the functionality is provided by firmware stored in read only memory (ROM), although the program could be stored on hard disk, where the STB is so equipped, and executed from random access memory (RAM). The configuration of the computer system can be varied to suit the level of desired functionality. The illustrated system is suitable for a processor which performs multimedia operations (such as a Pentium with MMX) but a simpler microcontroller could be used and the basic functionality required of the system could even be provided by dedicated hardware. The skilled person will recognise that many variations to the illustrative hardware can be made according to cost, component availability, system functionality and other considerations. Although the apparatus will be described as providing programmes to a television, it is suitable for use with any home entertainment device such as a VCR or DVD recorder and, in general, any programme receiving device.

In Figure 1 the set top box is generally illustrated at 10 and comprises a microprocessor 12 coupled to random access memory (RAM) 14, ROM 16 and peripheral component interconnect (PCI) bridge 20 by processor bus 18. ROM 16 holds system BIOS (Basic Input Output System) and operating software, the BIOS interfacing between the operating software and the STB hardware. If desired, the BIOS ROM can instead be coupled to the processor via the low speed ISA bus 44. PCI bus 22 is driven by PCI bridge 20 and is suitable for high speed data transfer although it is slower than processor bus 18. Optionally, hard/floppy disk controller 26 and disk drive 28, and digital versatile disk (DVD) drive and controller 30 are coupled to the processor via the PCI bus 22. To the ISA bus is attached non-volatile RAM 32 for storing, for example, user input information; real time clock 34; smart card interface 36 for smartcard 37 and infrared control link device 38. Commands are issued to the set top box by the user using a hand held infrared remote control unit 40 or infrared keyboard 41 which communicates with control link device 38.

Industry standard architecture (ISA) bus 44 is coupled to PCI bus 22 by ISA bus bridge 42. The system is preferably provided with means to receive television programmes from a variety of sources such as broadcast programmes from satellite, cable and conventional terrestrial transmitters, video or near-video-on-demand (both referred to as NVOD) sources, and Web cast programmes from Internet-based sources. However, a simplified system may lack such receiving means and may instead control the television to display a desired programme, for example by transmitting infrared commands to the transmitter as though it were the television's remote control device; in this case IR module 38 may also be an IR transceiver.

In Figure 1, conventional tuner 60 has input 62 coupled to a terrestrial television aerial to receive terrestrially broadcast programmes; cable television receiver 56 has input 58 coupled to a cable TV network; satellite receiver 52 has input 54 coupled to a satellite receiving dish; and digital terrestrial receiver 57 has input 55 from a suitable terrestrial aerial. Telephony modem 46, which may be a cable modem, or an International Subscriber Digital Network (ISDN) or an asymmetric digital subscriber line (ADSL) modem (or any suitable digital subscriber line device) is coupled to telephone line 50 to receive VOD/NVOD programmes. Digital programme receiving devices have their digital information stream output coupled to decode unit 66 (audio paths are not shown in Figure 1), which is also coupled to ISA bus 44 or PCI bus 22.

Television programmes may have associated data streams and the programme receiving means are therefore preferably provided with means to receive data and/or to extract data from received video signals which can, for example, be included in the vertical blanking interval (VBI) of a television signal. Since the ADSL connection provides a data channel, this can also be used for data communications. Such connections allow the system to handle data casting and to extract programme data such as broadcast channel identification information, time and date information and subtitles.

The apparatus is preferably configured to view programme video information and simultaneously browse the Web and carry out Web related activities, for example downloading software or information.

An audio and motion video compression module 64 is also coupled to bus 18 and may also be implemented in software. Data may be input to this to allow broadcast programmes to be recorded locally and made available for later viewing. The video data is compressed according to a standard format such as MPEG, Real Media or H323 and then stored as a compressed file on disk. Module 66 also includes corresponding decoding means to decompress the compressed video and audio. Optionally, the video compression and decompression can be performed by processor 12. The system is preferably operable to concurrently store a received programme and to play a stored programme by, for example, interleaving write and read-erase access cycles to the storage module's disk drive.

A video output carrying programme information, is coupled to the television via graphics adapter/video signal combiner 70, and modulator 72. If the television has a direct video input, modulator 72 may be omitted and the television 74 may be connected directly to video output via a SVGA socket, a SCART socket, S-Video socket. RCA phono plugs or other well known interfaces. Video RAM 70 is connected to the processor bus 18 and allows the system to generate graphics and combine them with the digital signal from video decode 66, for example using overlay or picture-in-picture modes, and can also output a video signal without any additional graphics. The system is configured to directly overlay text and/or graphics onto programme video and to achieve a similar result by overlaying a sparse Web page. This information can, for example, be used to provide further information about the programme or channel currently being viewed, for example information on "What's on next".

The system also includes an event detector module implemented in software to detect events in a programme video stream such as programme breaks within and/or between programmes. Such breaks or interruptions can be caused by commercial advertising or the interruption of other programmes for example news programmes. For example, in the U.K. a pair of vertical bars appears in the top right hand corner of the picture frame as a video switching mark shortly before a commercial break and the event detector is configurable to provide the video decode responsive to programme break detection. For digital transmissions, appropriate digital descriptor information is used to detect programme change.

The event detector can monitor events in any of the incoming video streams and either control the video switch directly or provide information to processor 12 for control of the video switch so that a programme break, such as a commercial, can be replaced by a source of supplementary programme material from one of the other programme receiving means. This may be termed microscheduling. The system is also configurable for the event detector to control the display of graphics information, for example displaying a Web page, either alone or with picture-in-picture or overlayed video, when the event occurs.

For example, if tuner 60 is providing ITV1, commercial breaks can be replaced by supplementary material from a cable channel from receiver 56, which could be defined by the set top box supplier or a programme service provider or by information previously downloaded or downloaded with the programme. Video switch output 67, initially coupled to the output of tuner 60, is coupled to the output of cable receiver 56 whilst switch output 69 continues to monitor the output of tuner 60 so that the event detector can provide a signal to control the video switch to switch output 67 back to tuner 60 at the end of the commercial break; alternatively the system can switch back after a predetermined time interval.

If only a single programme receiving means is present in the apparatus, this can be controlled to switch to a source of supplementary programme material such as a source of alternative commercials on detection of a programme break such as a commercial break, or to internally generated video, such as stored news, games or program schedule information and to switch back to the original programme again after a predetermined period or when an event is detected in the supplementary programme material video stream. Information determining the supplementary programme source channel may also be predefined, for example in firmware, or based upon information characterising a user of the apparatus, as described in more detail below.

Events can be determined by absolute and/or relative times, for example "at 10 p.m." or "five seconds after the start of the BMW advert(Registered Trade Mark)". Events, and the systems response to them, can be defined by extensions to HTML information associated with the relevant programmes. For example, in accordance with the recommendations of the Advanced Television Enhancement Forum (ATVEF) recommendations on proposed HTML extensions. The events and responses can also be transmitted in-band, for example in the VBI as a subtitle (the US EIA 746 standard) or in a digital video stream as a subtitle or as a separate event object in the data carousel, or even can be separately input via some other online connection.

The system is preferably equipped with bi-directional communications, so that information can be both received from and transmitted to remote apparatus. Thus cable receiving means 56, phone modem 46 are preferably all operable to transmit data as well as to receive programme and data information. Thus conventional Web-browser software in firmware may be employed to allow a user to interact with Web pages via the Internet, for example using IR remote control 40 to select hypertext links on Web pages displayed to the user by graphics adapter 70. Programme descriptor information can be displayed with selectable/clickable extensions and, more generally, Web-based electronic programme guide (EPG) information can be displayed. Although the operating system software has been described as being stored in ROM, it may be stored in non-volatile memory such as FLASH memory (EEPROM) whereby the system can be updated by downloading new software over one or other of the communication links, either when it becomes available or when a user pays to upgrade the system.

Also shown in Figure 1 is a database 76 remote from the set top box and comprising database storage means 78 and bi-directional communications link 80 for communication with the set top box (STB). Although shown remote from the apparatus, the programme database may be incorporated within the apparatus either in memory or on the local hard disk and generated from broadcast programme information. The database is provided with a software interface based on a standard protocol such as ODBC (Open Database Connectivity), for connection to other elements of the system. Again, although the database is illustratively shown as a unitary structure it could also comprise information held in a large number of disparate sources, for example electronic programme guides at various different Web page URL's. A further alternative is that the database is held remotely, as illustrated, with a copy of the database held locally in the set top box, for example, on disk or in the NVRAM and periodically updated by file transfer, for example, by telephone dial-up on demand or at a fixed time daily or by data insertion in the broadcast signal, for example overnight in in-band data such as VBI inserted data for analogue TV or as part of the data carousel for digital TV. Communication with the database can be by any conventional means, for example by phone modem 46 and/or a copy or partial copy of the database can be downloaded to the STB using the satellite 52, digital 57 and/or cable 56 receiver(s). The information held in the programme database is described in more detail below.

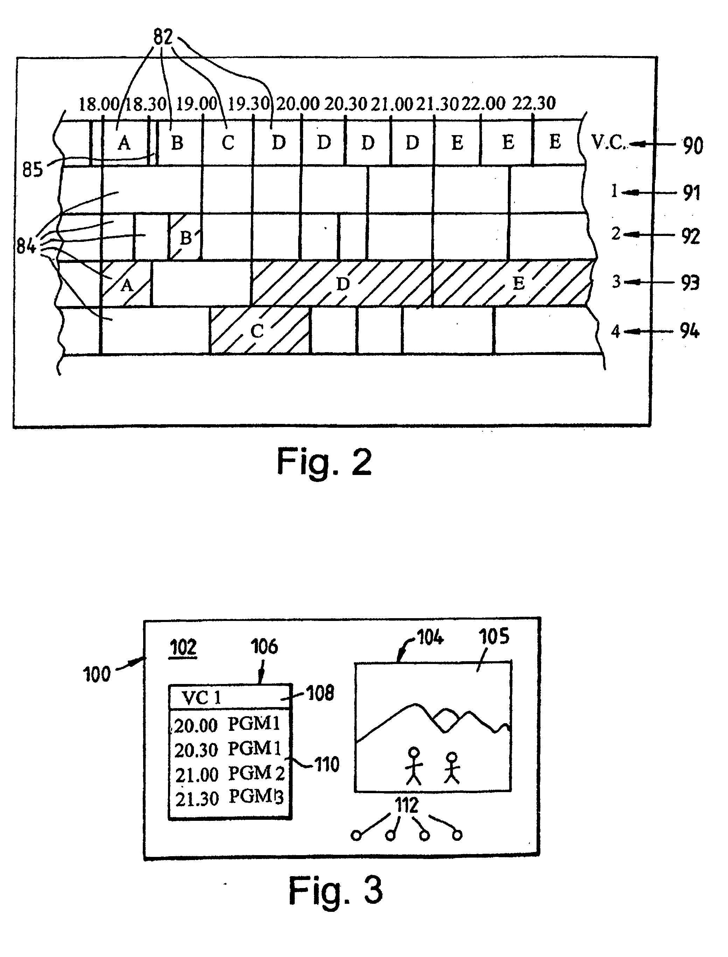

A virtual channel is a schedule of programmes which have been selected from programmes available from real channels or other programme sources (for example, Webcast programmes). The schedule is made up by selecting programmes from a variety of channels for showing in, preferably, defined time slots in the virtual channel. The concept of a virtual channel is illustrated diagrammatically in Figure 2. Figure 2 shows a virtual channel schedule 90 and schedules for four real channels, 91, 92, 93 and 94. The real "channels" may include cable, satellite, terrestrial and Web-cast television channels and NVOD programmes.

Illustratively the virtual channel 90 has a template structure with notional divisions at half hour intervals defining half hour time slots 82 for programme scheduling. Time slots of other lengths can also be defined and, more generally, a flexible structure can be adopted in which the time slots are of varying length, preferably with start and end times corresponding to start and end times of programmes on a real channel(s).

The real channels have programmes 84 of variable start time and duration scheduled as shown. In the illustrated example, the virtual channel schedule comprises five programmes, A, B, C, E and E during the interval 18:00 hours to 22:30 hours. Programme A is scheduled to occupy the slot from 18:00 hours 18:30 hours on the virtual channel; it is available on real channel 93 during the same interval and therefore a system for providing the virtual channel must select programme information from channel 93 for output during this time period.

The second time slot in the virtual channel begins at 18:30 hours and programme B, available on channel 92, is schedule for this time slot. Programme B ends at 19:00 hours, which corresponds with the end of the time slot on the virtual channel, but it starts after 18:30 hours, leaving a gap 85 in the virtual channel schedule. This gap may be filled either by programme material from channel 93 following programme A or by programme material from channel 92 preceding programme B, or by a supplementary programme material. Such supplementary material may comprise advertising from a standard source, material from a source defined by the virtual channel schedule information, or material from a source automatically chosen by the system according to available information (such as information describing the programmes in the virtual channel schedule or information describing or characterising a system user or user preferences). It may include material previously recorded on a local storage device. Since, by definition, VOD programmes are effectively available on-demand, gaps and overlaps in the virtual channel schedule can be adjusted by adjusting the start time of VOD programmes in the schedule.

Programme C from channel 94 is scheduled for the third illustrated half-hour time slot on the virtual channel, and programme D from channel 93 is scheduled for the following four time slots. It can be seen that programmes C and D overlap and, in the illustrated example, programme D has taken priority over programme C in the virtual channel schedule. Programme overlaps can be handled either by manually choosing which programme takes priority, or by pre-programmed rules. For example, the earlier or the later programme may always take precedence or rules can depend upon programme related information such as programme genre which allows rules such as "movies take priority over news" to be defined. In a preferred embodiment the system has a basic set of in-built rules which can be modified by the user.

As described above, when the set top box includes means to receive more than one programme at once and when it includes motion video storage means, overlapping programmes such as C and D may be scheduled at different times or to run consecutively. For example, programme C could be scheduled for both slots between 19:00 hours and 20:00 hours then, whilst, from 19:30 onwards C is being provided to the television, the initial half hour of D is recorded, and then after 20:00 hours the initial part of D is output to the television whilst the later part of D is concurrently recorded. This concurrent playback and recording is continued to move the end of programme D and the start of programme E to approximately 22:00 hours. The system is operable in a similar way to prevent a virtual channel schedule being disrupted by a programme which is broadcast at a later time (or an earlier time) than that at which it is initially described as being available. The actual broadcast time of a programme can be determined by video stream events and/or from data downloaded by the system and by concurrent recording and playback the whole schedule can be shifted back in time until a suitable gap or lower priority programme is encountered.

If desired, more than one consecutive programme from a real channel can be scheduled on the virtual channel, and in this case it is convenient to provide means whereby a user can map a portion of virtual channel 90 to a corresponding portion of a real channel. It is preferably also possible to fully map the virtual channel to a real channel so that, for example, virtual channel 90 may be defined as identical to real channel 93.

Although the scheduled entities have been referred to as programmes, other similar entities such as computer games, computer based learning activities and interactive telecommunication events may also be scheduled.

The information defining the virtual channel schedule comprises, at its most basic, an ordered list of programme entities. Associated with each entity is information specifying a real channel or other programme source, including other virtual channels, from which the channel entity is available. Preferably the virtual channel schedule information comprises, for each scheduled programme, information identifying the start time of the programme as well as information identifying a real channel on which the programme is available at that start time. Programme duration information may also be included. In the case of NVOD programmes the "real channel" information comprises NVOD programme source information.

The operating software in the ROM 16 of the set top box uses information defining the virtual channel schedule to control the set box top to provide the set scheduled programmes to output 74 to the television at the correct times. At a programme start time processor 12 selects the appropriate programme input means and real channel and logically couples the video stream to output 67 or the video switch and thence to the output 74 of the set top box. The video output is provided to the television so that the output video stream can be selected in the same way that other real channels on television are selected. In one embodiment the modulator 72 provides a UHF radio frequency output to the television and when the television is tuned to this frequency the programmes scheduled on the virtual channel are provided so that to a user the virtual channel is selectable so that it appears to another real channel.

Figure 3 shows an exemplary screen display 100 presented to the television user when the virtual channel is selected. The display comprises a background region 102, which may be plain or which may include logos and/or advertising material, and a picture-in-picture region 104 in which a currently selected video stream 105 is displayed. A programme information region 106 is provided with a header bar 108 identifying the currently selected virtual channel and a programme guide region 110 displaying a list of programmes and times. Predefined or soft menu buttons 112 are also provided for control of, *inter alia,* scheduling and electronic programme guide functions.

Screen display 100 may be downloaded as a Web page or may comprise locally generated graphics or may be a combination of these; if display 100 is a Web page, screen regions such as menu buttons 112 may include hypertext links to other Web pages. In a preferred embodiment, selecting region 108, for example by clicking on the region with a pointer, displays a list of channels including real and virtual channels; selecting region 110 changes the display of programme information, displaying programmes at other times and/or further information on a selected programme; and selecting region 105 expands the video to fill the screen.

The system includes input means to receive information, as described above, defining the virtual channel schedule. In a simple system, the input means comprises a communications device such as phone modem 46 or cable receiver 56 together with a software driver operating together to allow a schedule to be downloaded from a remote location such as a critic's choice Web page thus a user could. for example, download a newspaper's recommended choice of viewing for the evening. Smart card interface module 36 can similarly be used to load virtual channel schedules from a user's or a published Smart card (i.e. a card incorporating a silicon chip data storage module).

Preferably the operating software includes software to allow a user to define a virtual channel schedule to create a "personal" channel. For this mode of operation the system includes an interface means (hardware and/or software) to communicate with the programme database, as outlined above. To allow user scheduling of programmes the database must include programme time and channel information needed to construct the personal channel schedule as well as information identifying the programmes to be scheduled, for example programme titles.

The database may be held locally or remotely from the apparatus, for example at a regional head-end delivery point. In cable systems with a permanent connection normal remote access protocols can be used to download the data via some out-of-band data path, for example using a cable modem. Alternatively, both a local and a remote database can be used, with the local database as a mirror of the remote master database.

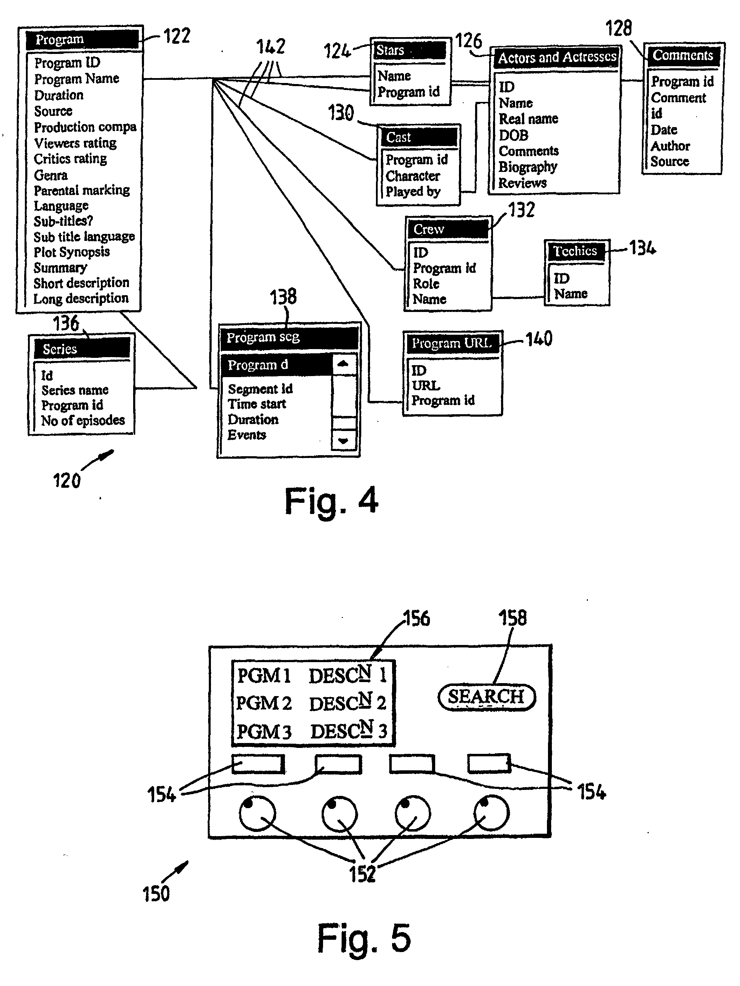

To allow the user to make an informed choice of programmes for scheduling the database preferably also comprises programme descriptor information characterising the content of the programmes in the database so that the user can search the database for programmes of a desired type or having specific features. Figure 4 shows an example schema 120 for a relational programme database. Associated with each programme in a "programme" table 122 are programme I.D., programme name, duration, source, production company, viewer's rating, critic's rating, genre, parental marking (age suitability/certification; violence or bad language; religion; nudity) language, indication of the presence of sub-titles, sub-title language, plot synopsis, summary, short description, long description, and other fields such as producer and director can also be included. Other illustrative linked tables include "stars" 124, "actors and actresses" 126, "comments" 128, "cast" 130, "crew" 132, "techies 134", "series 136", "programme segment" 138, "programme, and URLs" 140 (identifying, for example, an NVOD programme source). The links 142 between the tables in the relational database indicate which tables share data.

The data can be manually entered into the database or derived from a standard electronic programme guide feed or retrieved from broadcasters' or other Web pages using Web-spider search techniques or can be derived from a combination of these sources. If a Web-spider search engine is used, it is desirable that the EPG data to be collected by the Web-spider is published in a standard format so that the information corresponding to the various fields in the database can easily be located.

In an exemplary embodiment the Web-spider (which is essentially a software module) begins at a starting Web page, which may be predefined or manually entered. This page is searched for programme information for the database and for hypertext links to other Web pages, preferably using key words to identify the potentially most useful links. The search engine then either follows a single link to a new Web page where again electronic programme guide data and further hypertext links are gathered, or the software creates two or more separate tasks to follow a plurality of hypertext links simultaneously. In this way EPG data is gathered as the search engine works its way through a tree of hypertext links. When a dead end is reached the search engine works back up the tree until an unused link is found.

Although a notional tree of links is constructed, in reality there is no tree-like hierarchy amongst the Web pages searched and, theoretically, such a strategy allows virtually the entire Web to be searched. If desired, searching can be made more efficient by including a list of URLs or links to pages where it is known that EPG data is located, or to pages which are known to include links to useful EPG pages, and the search engine can be configured to search these first or to search to a limited depth from these predefined pages. Again, the predefined pages can, for example, be manually entered or downloaded from a manually updated source.

An exemplary embodiment of the system includes a user interface for definition of a personal channel scheduled by the user and/or for tailoring or alteration of a predefined or downloaded virtual channel schedule. Figure 5 shows an exemplary screen display 150 for such a user interface, which allows the user to search the programme database according to user defined criteria and to display programmes matching the criteria, either for immediate showing, or for recording for later viewing, or for scheduling on a personal channel. User interface 150 for capturing the users input and displaying the results, can be a Web-browser extended for TV use, for example in accordance with the recommendations of the Advanced Television Enhancement Forum (ATVEF).

In the example, knobs 152 are used to dial up criteria which appear in display windows 154. Thus a first window may be used to select a genre such as a movie, the second window an associated theme such as "western", a third window, "stars" and a fourth window "John Wayne". A more advanced user interface can also include means to enter key words for word, name, subject, and /or title word searches to allow user for example, to make a request such as "I want to watch gardening programme about heritage tomatoes".

Example search criteria include programme name, star, genre (i.e. programme type such as movie, documentary, news bulletin), theme (e.g. western, comedy, gardening), key words and description, critic's/viewers' ratings, source or broadcast channel (e.g. BBC1), parental guidelines (e.g. "No nudity", or "before 9 p.m."), language.

The system operating software searches the database using standard database query techniques according to the user defined criteria. After the criteria has been dialled-up or entered, a list of programmes and related information (title, time, duration, description etc) appears in window 156 and button 158 can be used for additional searching/programme display.

The system can also include means to identify a current user of the set top box. In one embodiment this is provided by a login screen where a user name and password must be entered before other elements of the operating system can be accessed. Since the system is aware of the user's identity, the viewing and/or scheduling of programmes can be restricted in accordance with the current user. For example, channel descriptor bar 108 in Figure 3 can be selectable to list channels available to a current user. In an alternative embodiment, only one or a few users need enter a password and all the non-password protected users are subject to viewing/scheduling restrictions. This arrangement allows parental control guidelines to be set by a nominated user, such as the account holder, or other users of the set top box.

Parental control may include or exclude programmes with markings that indicate certain categories, such as nudity, violence, religion, bad language, gambling, alcohol or substance abuse, and all set time constraints, for example, "before 9 p.m.", or "not more than one hour per day or five hours per week". This is achieved by storing data linking a user identity (either a specific named user or a class such as "non-password user") with programme channel and/or descriptor information. If a number of personal channels are shared between a number of users, separate user defined sets of personal channels may also be specified.

The system may also include input means to receive other user information, in addition to user identity information; this may be stored locally or remotely. In particular, the system is capable of receiving preference information characterising a user's preferred programmes. This can be based on information directly entered by a user or on information characterising the user's history of usage of the system, for example, generalisations using AI (Artificial Intelligence) techniques, based upon locally stored viewing statistics. User entered preference information may describe explicit user preferences (for example, "I like westerns") or may be based upon more general information characterising the user, such as their socio-economic class. Preference information can also be derived from "voting", in which the user specifies programmes which have been enjoyed and/or disliked.

The system software preferably allows a user the option of making a personal channel schedule available for transmission to a remote destination. This allows targeted marketing by a service provider and the exchange of virtual channel schedules, either explicitly defined or as preference data sets, to be exchanged between users in different locations, for example between friends and neighbours. Preferably schedule information can be downloaded to a Smart card which the user can then carry around, for example to allow the viewing of preferred personal channels on a hotel television. The Smart card need only carry the user's identity if the user's information is remotely accessible either from a home set top box or from a central database.

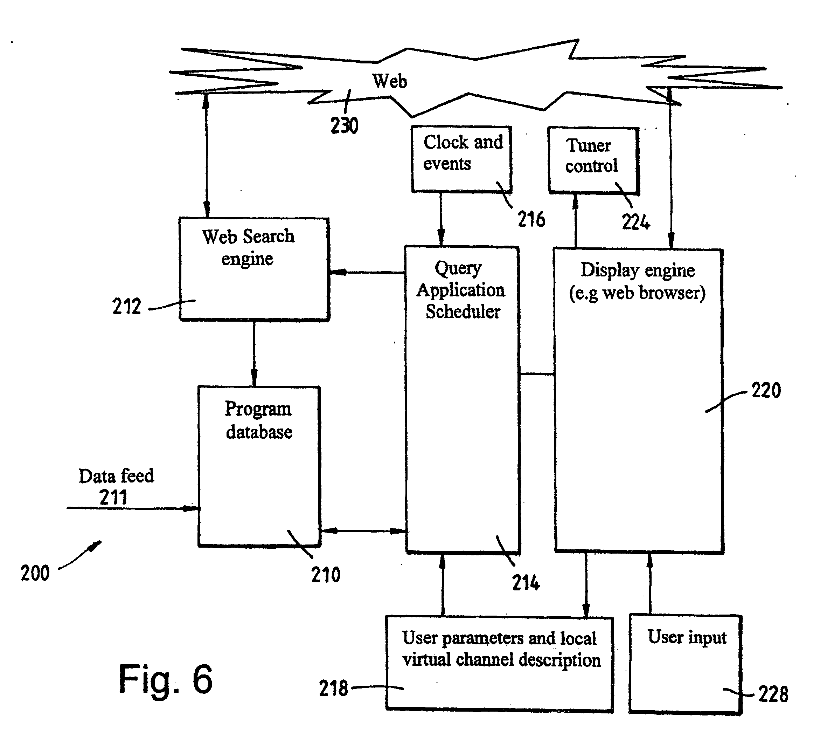

A block diagram 200 illustrating modules of the operating software of the system is shown in Figure 6. Programme database 210 receives data from Web-search engine 214 coupled to World Wide Web (Internet) 230, and also data from data feed 211. Virtual channel scheduling is carried out by scheduler 214, which interacts with programme database 210, and controls Web-search engine 212. This receives inputs from real- time clock and events handling software drivers 216 and user preference information/parameters and virtual/personal channel description data from module 218.

The scheduler 214 also interacts with display engine 220, which controls the display of images on the television, and which preferably incorporates a Web-browser. The display engine interacts with tuner control module 224 to control the programme receiving means to provide programmes to the set top box output. It also receives user input from module 228 for scheduling programmes on a personal channel and for direct control of programmes provided to the television. Optionally a payment management module is also included to manage subscription payments to allow programme choices to be made from subscription channels, and to periodically download billing data for pay-per-view programmes.

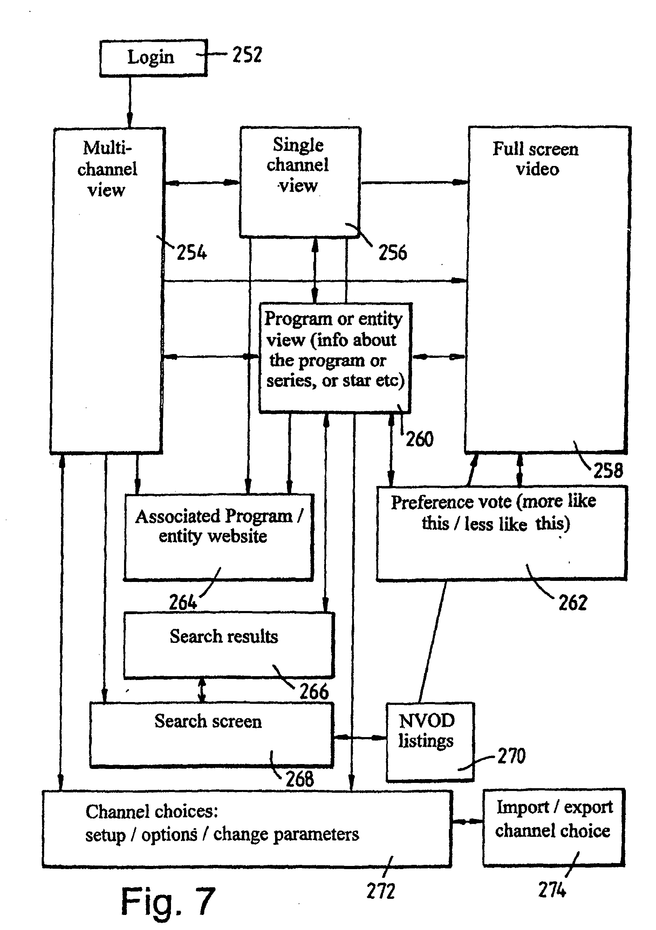

Figure 7 schematically shows elements of a user interface to the system and links between these elements which allow a user to navigate through the displayed menus and screens. The user enters at login screen 252 which, as described above, restricts access to the system. Once the user has successfully logged-on a multi-channel programme display 254 is presented in which the screen is divided into a number of small regions each of which displays a different programme. From this the user may navigate to a single channel view 256 similar to that of Figure 3, in which the user is presented with a single programme in a window on Web page, together with an electronic programme guide providing programme and time information. Selecting the video picture results in full screen video display 258.

From any one of screen displays 254, 256 and 258, additional information about a programme may be displayed - for example, a brief description and critic's comments - in screen view 260. From this screen and from the full screen video display the user can enter preference information and/or vote on screen 262 to indicate that more (or less) programmes of the type displayed are desired.

Associated programmes and/or Web sites providing further information relating to a programme may be accessed from screen 264 via the single 256 and multi-channel 254 view screens and programme information screen 260. Search screen 268 and search results screen 266 may be accessed as illustrated by the links shown, and also from NVOD listings screen 270. Further channel choices, including current user restrictions user defined virtual channel sets, system set-up options and user parameters may be accessed from screen 272; virtual channel schedules may also be defined from this screen, and user and channel data may be imported and exported via screen 274.

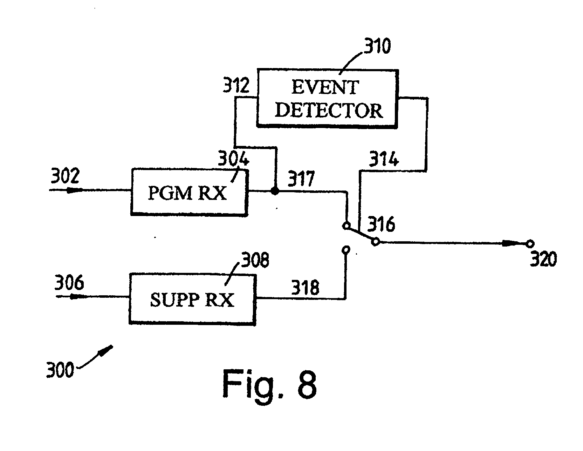

The apparatus of Figure 1 is suitable for replacing programme breaks, for example due to commercial advertising, with other supplementary programme material, as described above. The user preference information or other user-characterising information can be used to select the source of supplementary programme material, for example to more specifically target advertising. However, the required functionality can be achieved with apparatus that is simpler than that shown in Figure 1, an example of which is generally shown at 300 in Figure 8.

Programme receiver 304 receives a television programme via input connection 302 to a satellite or terrestrial aerial, cable or telephone line or any other suitable programme source. Supplementary programme material is received at input 306 of receiver 308. Event detector 310 is coupled to the output of programme receiver 304 to detect programme break events and control switch 316 to couple either output 317 of programme receiver 304 or output 318 of receiver 308 to the output 320 of the apparatus.

In the configuration shown, event detector 310 can detect the end of the programme break and switch output 320 back to the programme receiver when the programme continues. In a still simpler embodiment, receiver 308 and switch 316 is dispensed with and event detector 310 controls programme receiver 304 to select a source of supplementary programme material when a programme break is detected; in this case receiver 304 can be returned to the programme source after a predetermined time interval.

Although the programme break replacement system has been described in the specific context of a system for scheduling television programmes, the system is also useful in the context of systems suitable for scheduling of programme entities, including programme clips, digital music/audio programmes and computer games.

Many other effective alternatives will occur to those skilled in the art and it is to be understood that the invention is not limited to the described embodiments.

## Claims

1. Apparatus to interface with a home entertainment device (74) for providing the home entertainment device (HED) with a modified programme channel,
the modified programme channel comprising a schedule of programmes on a first programme channel, having modified parts within and/or between the programmes, the apparatus comprising:
a first programme reception device (304) to receive, locally to the HED, programmes on the first programme channel; and
means (306, 308) to receive, locally to the HED, supplementary programme material;
output means, coupled to the first programme reception device and to the means to receive supplementary programme material, to output the scheduled programmes and supplementary programme material to the home entertainment device;
programme event detection means (310), coupled to the programme reception device, to detect an event in a programme; and
switching means (316), responsive to the programme event detection means to switch the output from the programme to the supplementary programme material;
the apparatus being **characterised in that** the means to receive the supplementary programme material comprises means to receive supplementary programme material from a source different to the first programme channel.

2. Apparatus as claimed in claim 1 wherein the event is a break or interruption in the programme.

3. Apparatus as claimed in claim 1 or 2, wherein the means to receive supplementary programme material comprises the programme reception device and wherein the switching means switches the programme reception device from the first programme channel to a second channel to receive the supplementary programme material.

4. Apparatus as claimed in claim 1 or 2, wherein the means to receive supplementary programme material comprises a second reception device and wherein the switching means switches to selectively couple one of the programme reception devices to the output means.

5. Apparatus as claimed in any preceding claim wherein the switching means is further responsive to a programme reception device to switch the output back from the supplementary programme material to the first programme channel.

6. Apparatus as claimed in any one of claims 1 to 5 further comprising local programme material storage means and wherein the source of supplementary programme material is selectable from sources including locally stored programme material.

7. Apparatus as claimed in any one of claims 1 to 5 wherein the means to receive supplementary programme material includes means to receive near video-on-demand video, information from the internet, and locally stored programme material.

8. Apparatus as claimed in claim 1 or 2, wherein the means to receive supplementary programme material comprises means to receive material from a second channel different to the first channel.

9. Apparatus as claimed in any one of claims 1 to 5, wherein the supplementary programme material comprises internally generated video.

10. Apparatus as claimed in claim 9, wherein the supplementary programme material comprises programme schedule information.

11. Apparatus as claimed in any one of claims 1 to 5, wherein the event detection means controls the display of graphics information on the home entertainment device.

12. Apparatus as claimed in claim 11, wherein the event detection means controls the display of a web page on the home entertainment device.

13. Apparatus as claimed in claim 12, wherein the event detection means controls the display of the web page with picture-in-picture or overlayed video.

14. Apparatus as claimed in any one of claims 1 to 13, wherein the detected event is determined by an absolute time value.

15. Apparatus as claimed in any one of claims 1 to 13, wherein the detected event is determined by a relative time value.

16. Apparatus as claimed in any one of claims 1 to 15, wherein the switching means is able to switch the output back from the supplementary programme material to the programme after a predetermined time interval.

17. Apparatus as claimed in any one of claims 1 to 15, wherein the switching means is able to switch the output back from the supplementary programme material to the programme on detection of an event in a video stream of the supplementary programme material.

18. Apparatus as claimed in any one of claims 1 to 17, wherein the events and the response of the apparatus to the events are defined by extensions to HTML information associated with programmes on the first programme channel.

19. Apparatus as claimed in any one of claims 1 to 17, wherein the events and the response of the apparatus to the events are transmitted in-band on the first programme channel or in a digital video stream as a subtitle or as a separate event object in a data carousel of the digital video stream.

20. Apparatus as claimed in any one of claims 1 to 17, wherein the events and the response of the apparatus to the events are input to the apparatus via an on-line connection.

21. Apparatus as claimed in any one of claims 1 to 17, wherein the event detection means is able to monitor events in a plurality of incoming video streams to control the switching means directly or via a processor (12).

22. Apparatus as claimed in any one of claims 1 to 21, wherein the source of supplementary programme material is predefined.

23. Apparatus as claimed in claim 22, wherein the source of supplementary programme material is defined by firm ware in the apparatus.

24. Apparatus as claimed in claim 22, wherein the source of supplementary programme material is defined by source definition information downloaded from a service provider to the apparatus.

25. Apparatus as claimed in any one of claims 1 to 21, wherein the source of supplementary programme material is selected automatically by the apparatus according to information available to the apparatus.

26. Apparatus as claimed in any preceding claim further comprising:
input means to receive information characterising a user of the apparatus; and
means to select the source of supplementary programme material in response to the user characterising information.

27. Apparatus as claimed in claim 26, wherein the user characterising information is preference information characterising an individual user's preferred programmes.

28. Apparatus as claimed in claim 27, further comprising means to provide a home entertainment device with a personal channel,
the personal channel comprising a schedule of programmes and corresponding start times, the programmes being selected from programmes available on a plurality of real channels and/or other programme sources, the apparatus further comprising:
database interface means (46) to communicate with a programme database (76) comprising programme information for a plurality of programmes, including for each programme the programme start time, a real channel or other programme source the programme is available from at that start time, and programme descriptor information characterising the content of the programme;
input means (38, 40), to receive the preference information characterising an individual user's preferred programmes;
automatic scheduling means (12) coupled to the database interface means to receive the programme information, to operate on the preference information and programme descriptor information to automatically generate schedule information for a personal channel for the user, the schedule information comprising, for each scheduled programme, programme start time information and information identifying a real channel or other programme source from which the programme is available at that start time;
control means (12) to control a programme reception device using the personal channel schedule information to select and receive, at the scheduled start time, the real channel or programme source corresponding to the scheduled programme;
output means (72) to provide scheduled programmes thus received to the home entertainment device such that the personal channel is selectable by a user of the home entertainment device in a similar way as a real programme channel; and
a user interface (40, 74) for user input of the preference information the user interface being configured to allow a user to input preference weighting for each of a plurality of predetermined program descriptors, and further comprising display means to display a personal channel schedule corresponding to the user's preferences, whereby the user is able to interactively define a personal channel, and wherein the source of supplementary program material is determined by the personal channel schedule.

29. Apparatus as claimed in claim 28 wherein gaps and overlaps in the personal channel schedule are adjusted by adjusting the start time of video-on-demand programmes in the schedule.

30. Apparatus as claimed in claim 28 or 29
wherein a predetermined program descriptor comprises a set of keywords, and further comprising means to download a set of keywords to the apparatus.

31. Apparatus as claimed in claim 30
wherein the user interface further comprises means for a user to define a program descriptor and/or keyword.

32. Apparatus as claimed in any one of claims 28 to 31
further comprising user profile input means to define a plurality of user profile descriptors and wherein the user profile descriptors modify the weights of the program descriptors.

33. Apparatus as claimed in claim 32
wherein the user profile input means comprises access controlled means to block provision to the contact means of programmes with keywords or descriptors matching programme blocking keywords or descriptors.

34. Apparatus as claimed in any preceding claim further wherein the supplementary programme material comprises advertising material.

35. Apparatus as claimed in any one of claims 1 to 34, wherein the programme reception device (304) comprises means to receive programmes via one or more of a satellite, a terrestrial aerial, a cable line, and a telephone.

36. Apparatus as claimed in any one of claims 1 to 35, wherein the programmes on the first programme channel comprise digital music/audio programmes.

37. Apparatus as claimed in any one of claims 1 to 35, wherein the programmes on the first programme channel comprise television programmes.

38. Apparatus as claimed in claim 37, wherein the home entertainment device (74) is a television and the apparatus is a television set top box.

39. Apparatus as claimed in claim 37 or 38, including means for displaying an electronic programme guide.

40. A method of providing a home entertainment device (HED) (74) with a modified programme channel, the modified programme channel comprising a schedule of programmes on a first programme channel having modified parts within and/or between the programmes, the method comprising performing, locally to the HED, the steps of:
receiving the programmes on the first programme channel;
receiving supplementary programme material;
providing the scheduled programmes to the home entertainment device;
detecting an event in a programme; and
responsive to the programme event detection providing the supplementary programme material to the home entertainment device,
the method being **characterised by** receiving the supplementary programme material from a source different to the first programme channel.

41. A method as claimed in claim 40, wherein the event is a break or interruption in the programme.

42. A method as claimed in claim 40 to 41, further comprising switching from the first programme channel to a second channel to receive the supplementary programme material.

43. A method as claimed in claim 40 or 41, further comprising selecting one of two programme reception devices to provide the supplementary programme material.

44. A method as claimed in any one of claims 40 to 43, further comprising switching back from the supplementary programme material to the first programme channel.

45. A method as claimed in any one of claims 40 to 44, comprising selecting the supplementary programme material from sources including locally stored programme material.

46. A method as claimed in any one of claims 40 to 44, comprising selecting the supplementary programme material from sources including near video on demand material, material available via the internet, and locally stored material.

47. A method as claimed in claim 40 or 41, comprising receiving the supplementary programme on a second channel different to the first channel.

48. A method as claimed in any one of claims 40 to 44, wherein the source of supplementary programme material is internally generated video.

49. A method as claimed in claim 48, wherein the supplementary programme material includes programme schedule information.

50. A method as claimed in any one of claims 40 to 44, comprising providing graphics information for display on the home entertainment device responsive to the programme event detection.

51. A method as claimed in claim 50, comprising providing a web page for display on the home entertainment device responsive to the programme event detection.

52. A method as claimed in any one of claims 40 to 51, wherein events and responses to the events are defined by information associated with programmes on the first programme channel.

53. A method as claimed in any one of claims 40 to 51, wherein events and responses to the events are received via an on-line connection.

54. A method as claimed in any one of claims 40 to 53, wherein the source of supplementary programme material is defined by information provided from a service provider.

55. A method as claimed in any one of claims 40 to 53, comprising selecting the source of supplementary programme material automatically according to available information.

56. Apparatus as claimed in any one of claims 40 to 55, comprising monitoring events in a plurality of incoming video streams for controlling the provision of the supplementary programme material.

57. A method as claimed in any one of claims 40 to 56, further comprising receiving information characterising a user of the apparatus; and
selecting the source of supplementary programme material in response to the user characterising information.

58. A method as claimed in claim 57
wherein the user characterising information is preference information characterising an individual user's preferred programmes.

59. A method as claimed in claim 58 further comprising providing a home entertainment device with a personal channel and wherein the modified programme channel is a said personal channel
the personal channel comprising a schedule of programmes and corresponding start times, the programmes being selected from programmes available on a plurality of real channels and/or other programme sources, the method further comprising:
receiving programme information from a programme database (76) comprising programme information for a plurality of programmes, including for each programme the programme start time, a real channel or other programme source the programme is available from at that start time, and programme descriptor information characterising the content of the programme;
receiving preference information characterising a user's preferred programmes including a preference weighting for at least one of a plurality of predetermined program descriptors;
operating on the preference information and programme descriptor information to automatically generate schedule information for a personal channel using the programme information, the schedule information comprising, for each scheduled programme, programme start time information and information identifying a real channel or programme source from which the programme is available at that start time;
controlling a programme reception device (52, 56, 57, 60) using the personal channel schedule information to select and receive, at the scheduled start time, the real channel or programme source corresponding to the scheduled programme;
providing scheduled programmes thus received to the home entertainment device such that the personal channel is selectable by a user of the home entertainment device in a similar way as a real programme channel; and
determining the source of supplementary programme material using the personal channel schedule.

60. A method as claimed in claim 59, further comprising adjusting gaps and overlaps in the personal channel schedule by adjusting the start time of video-on-demand programmes.

61. A method as claimed in any one of claims 40 to 60, comprising receiving the programmes on the first programme channel via one or more of a satellite link, a terrestrial aerial, a cable link and a telephone link.

62. A method as claimed in any one of claims 40 to 61, wherein the programmes comprise digital music/audio programmes.

63. A method as claimed in any one of claims 40 to 61, wherein the programmes comprise television programmes.

64. A method as claimed in claim 63, wherein the home entertainment device is a television and the method is performed on a set top box.

65. A method as claimed in claim 63 or 64, further comprising providing the home entertainment device with an electronic programme guide.

66. A computer program to, when running, perform the method of any one of claims 40 to 66.

67. The computer program of claim 66, stored on a computer readable medium.

## Patentansprüche

1. Vorrichtung zur Kopplung mit einer Heimunterhaltungseinrichtung (74), um die Heimunterhaltungseinrichtung (HED) mit einem modifizierten Programmkanal zu versehen,
wobei der modifizierte Programmkanal eine Planung von Programmen auf einem ersten Programmkanal umfasst, der modifizierte Teile innerhalb und/oder zwischen den Programmen aufweist, wobei die Vorrichtung umfasst:
eine erste Programmempfangseinrichtung (304), um lokal zu der HED, Programme auf dem ersten Programmkanal zu empfangen; und
eine Einrichtung (306, 308), um lokal zu der HED, Zusatzprogrammmaterial zu empfangen;
eine Ausgabeeinrichtung, die mit der ersten Programmempfangseinrichtung und mit der Einrichtung zum Empfangen von Zusatzprogrammmaterial gekoppelt ist, um die geplanten Programme und Zusatzprogrammmaterial an die Heimunterhaltungseinrichtung auszugeben;
eine Programmereignis-Erfassungseinrichtung (310), die mit der Programmempfangseinrichtung gekoppelt ist, um ein Ereignis in einem Programm zu erfassen; und
eine Schalteinrichtung (316), die auf die Programmereignis-Erfassungseinrichtung anspricht, um den Ausgang von dem Programm auf das Zusatzprogrammmaterial umzuschalten;
wobei die Vorrichtung **dadurch gekennzeichnet ist, dass** die Einrichtung zum Empfangen des Zusatzprogrammmaterials eine Einrichtung zum Empfangen des Zusatzprogrammmaterials von einer Quelle, die sich von dem ersten Programmkanal unterscheidet, umfasst.

2. Vorrichtung nach Anspruch 1, wobei das Ereignis eine Pause oder Unterbrechung in dem Programm ist.

3. Vorrichtung nach Anspruch 1 oder 2, wobei die Einrichtung zum Empfangen von Zusatzprogrammmaterial die Programmempfangseinrichtung umfasst und wobei die Schalteinrichtung die Programmempfangseinrichtung von dem ersten Programmkanal auf einen zweiten Kanal zum Empfangen des Zusatzprogrammmaterials umschaltet.

4. Vorrichtung nach Anspruch 1 oder 2, wobei die Einrichtung zum Empfangen von Zusatzprogrammmaterial eine zweite Empfangseinrichtung umfasst und wobei die Schalteinrichtung schaltet, um eine der Programmempfangseinrichtungen mit der Ausgabeeinrichtung selektiv zu koppeln.

5. Vorrichtung nach irgendeinem vorangehenden Anspruch, wobei die Schalteinrichtung ferner auf eine Programmempfangseinrichtung anspricht, um den Ausgang von dem Zusatzprogrammmaterial zurück auf den ersten Programmkanal umzuschalten.

6. Vorrichtung nach irgendeinem der Ansprüche 1 bis 5, ferner umfassend eine lokale Programmmaterial-Speichereinrichtung, und wobei die Quelle von Zusatzprogrammmaterial aus Quellen, die lokal gespeichertes Programmmaterial einschließen, wählbar ist.

7. Vorrichtung nach irgendeinem der Ansprüche 1 bis 5 wobei die Einrichtung zum Empfangen von Zusatzprogrammmaterial eine Einrichtung zum Empfangen von Nahezu-Video-bei-Bedarf (near video-on-demand) Video, Information von dem Internet, und lokal gespeicherten Programmmaterial einschließt.

8. Vorrichtung nach Anspruch 1 oder 2, wobei die Einrichtung zum Empfangen von Zusatzprogrammmaterial eine Einrichtung zum Empfangen von Material von einem zweiten Kanal, der zu dem ersten Kanal unterschiedlich ist, umfasst.

9. Vorrichtung nach irgendeinem der Ansprüche 1 bis 5, wobei das Zusatzprogrammmaterial intern erzeugtes Video umfasst.

10. Vorrichtung nach Anspruch 9, wobei das Zusatzprogrammmaterial Programmplanungsinformation umfasst.

11. Vorrichtung nach irgendeinem der Ansprüche 1 bis 5, wobei die Ereigniserfassungseinrichtung die Anzeige von Grafikinformation auf der Heimunterhaltungseinrichtung steuert.

12. Vorrichtung nach Anspruch 11, wobei die Ereigniserfassungseinrichtung die Anzeige einer Web-Seite auf der Heimunterhaltungseinrichtung steuert.

13. Vorrichtung nach Anspruch 12, wobei die Ereigniserfassungseinrichtung die Anzeige der Web-Seite mit einem Bild-in-Bild oder einem überlagerten Video steuert.

14. Vorrichtung nach irgendeinem der Ansprüche 1 bis 13, wobei das erfasste Ereignis durch einen Absolutzeitwert bestimmt wird.

15. Vorrichtung nach irgendeinem der Ansprüche 1 bis 13, wobei das erfasste Ereignis durch einen Relativzeitwert bestimmt wird.

16. Vorrichtung nach irgendeinem der Ansprüche 1 bis 15, wobei die Schalteinrichtung in der Lage ist, den Ausgang von dem Zusatzprogrammmaterial zurück auf das Programm nach einem vorgegebenen Zeitintervall umzuschalten.

17. Vorrichtung nach irgendeinem der Ansprüche 1 bis 15, wobei die Schalteinrichtung in der Lage ist, den Ausgang von dem Zusatzprogrammmaterial zurück auf das Programm bei einer Erfassung eines Ereignisses in einem Videostrom des Zusatzprogrammmaterials umzuschalten.

18. Vorrichtung nach irgendeinem der Ansprüche 1 bis 17, wobei die Ereignisse und die Antwort der Vorrichtung auf die Ereignisse durch Erweiterungen einer HTML-Information, die zu Programmen auf dem ersten Programmkanal gehört, definiert sind.

19. Vorrichtung nach irgendeinem der Ansprüche 1 bis 17, wobei die Ereignisse und die Antwort der Vorrichtung auf die Ereignisse innerhalb eines Bands auf dem ersten Programmkanal oder in einem digitalen Videostrom als ein Untertitel oder als ein getrenntes Ereignisobjekt in einem Datenkarussell des digitalen Videostroms übertragen werden.

20. Vorrichtung nach irgendeinem der Ansprüche 1 bis 17, wobei die Ereignisse und die Antwort der Vorrichtung auf die Ereignisse der Vorrichtung über eine On-Line-Verbindung eingegeben werden.

21. Vorrichtung nach irgendeinem der Ansprüche 1 bis 17, wobei die Ereigniserfassungseinrichtung in der Lage ist, Ereignisse in einer Vielzahl von ankommenden Videoströmen zu überwachen, um die Schalteinrichtung direkt oder über einen Prozessor (12) zu steuern.

22. Vorrichtung nach irgendeinem der Ansprüche 1 bis 21, wobei die Quelle des Zusatzprogrammmaterials vordefiniert ist.

23. Vorrichtung nach Anspruch 22, wobei die Quelle des Zusatzprogrammmaterials durch eine Firmware in der Vorrichtung definiert ist.

24. Vorrichtung nach Anspruch 22, wobei die Quelle des Zusatzprogrammmaterials durch eine Quellendefinitionsinformation definiert wird, die von einem Dienstanbieter an die Vorrichtung heruntergeladen wird.

25. Vorrichtung nach irgendeinem der Ansprüche 1 bis 21, wobei die Quelle des Zusatzprogrammmaterials automatisch durch die Vorrichtung in Übereinstimmung mit Information, die der Vorrichtung zur Verfügung steht, gewählt wird.

26. Vorrichtung nach irgendeinem vorangehenden Anspruch, ferner umfassend:
eine Eingabeeinrichtung zum Empfangen von Information, die einen Benutzer der Vorrichtung charakterisiert; und
eine Einrichtung zum Wählen der Quelle des Zusatzprogrammmaterials im Ansprechen auf die den Benutzer charakterisierende Information.

27. Vorrichtung nach Anspruch 26, wobei die den Benutzer charakterisierende Information eine Präferenzinformation ist, die bevorzugte Programme eines einzelnen Benutzers charakterisiert.

28. Vorrichtung nach Anspruch 27, ferner umfassend eine Einrichtung, um eine Heimunterhaltungseinrichtung mit einem persönlichen Kanal zu versehen,
wobei der persönliche Kanal eine Planung von Programmen und entsprechenden Startseiten umfasst, wobei die Programme aus Programmen gewählt sind, die auf einer Vielzahl von realen Kanälen und/oder anderen Programmquellen verfügbar sind, wobei die Vorrichtung ferner umfasst:
eine Datenbankkopplungseinrichtung (46) zum Kommunizieren mit einer Programmdatenbank (76), die Programminformation für eine Vielzahl von Programmen umfasst, einschließlich für jedes Programm der Programmstartzeit, eines echten Kanals oder einer anderen Programmquelle, von dem/von der das Programm bei der Startzeit verfügbar ist, und Programmbeschreiberinformation, die den Inhalt des Programms charakterisiert umfasst;
eine Eingabeeinrichtung (38, 40) zum Empfangen der Präferenzinformation, die bevorzugte Programme eines einzelnen Benutzers charakterisiert;
eine automatische Planungseinrichtung (12), die mit der Datenbankkopplungseinrichtung gekoppelt ist, um die Programminformation zu empfangen, um mit der Präferenzinformation und der Programmbeschreiberinformation zu arbeiten, um automatisch eine Planungsinformation für einen persönlichen Kanal für einen Benutzer zu erzeugen, wobei die Planungsinformation umfasst, für jedes geplante Programm, eine Programmstartzeitinformation und eine Information, die einen echten Kanal oder eine andere Programmquelle identifiziert, von dem/von der das Programm zu dieser Startzeit verfügbar ist;
eine Steuereinrichtung (12) zum Steuern einer Programmempfangseinrichtung unter Verwendung der persönlichen Kanalplanungsinformation zum Wählen und Empfangen, zu der geplanten Startzeit, des echten Kanals oder der Programmquelle, die dem geplanten Programm entspricht;
eine Ausgabeeinrichtung (72) zum Bereitstellen von geplanten Programmen, die somit empfangen werden, an der Heimunterhaltungseinrichtung, so dass der persönliche Kanal durch einen Benutzer der Heimunterhaltungseinrichtung in einer ähnlichen Weise wie ein echter Programmkanal wählbar ist; und
eine Benutzerschnittstelle (70, 74) für eine Benutzereingabe der Präferenzinformation, wobei die Benutzerschnittstelle konfiguriert ist, um einem Benutzer zu ermöglichen, eine Präferenzgewichtung für jeden einer Vielzahl von vorgegebenen Programmbeschreibern einzugeben, und ferner umfassend eine Anzeigeeinrichtung zum Anzeigen einer persönlichen Kanalplanung entsprechend zu den Präferenzen des Benutzers, wodurch der Benutzer in der Lage ist, interaktiv einen persönlichen Kanal zu definieren und wobei die Quelle des Zusatzprogrammmaterials durch die persönliche Kanalplanung bestimmt wird.

29. Vorrichtung nach Anspruch 28, wobei Spalte und Überlappungen in der persönlichen Kanalplanung durch Einstellen der Startzeit von Video-bei-Bedarf (video-on-demand) Programmen in der Planung eingestellt werden.

30. Vorrichtung nach Anspruch 28 oder 29, wobei ein vorgegebener Programmbeschreiber einen Satz von Schlüsselwörtern umfasst, und ferner umfassend eine Einrichtung zum Herunterladen eines Satzes von Schlüsselwörtern an die Vorrichtung.

31. Vorrichtung nach Anspruch 30, wobei die Benutzerschnittstelle ferner eine Einrichtung für einen Benutzer umfasst, um einen Programmbeschreiber und/oder ein Schlüsselwort zu definieren.

32. Vorrichtung nach irgendeinem der Ansprüche 28 bis 31, ferner umfassend eine Benutzerprofil-Eingabeeinrichtung zum Definieren einer Vielzahl von Benutzerprofilbeschreibern und wobei die Benutzerprofilbeschreiber die Gewichtungen der Programmbeschreiber modifizieren.

33. Vorrichtung nach Anspruch 32, wobei die Benutzerprofil-Eingabeeinrichtung eine Zugriffgesteuerte Einrichtung umfasst, um eine Bereitstellung von Programmen mit Schlüsselwörtern oder Beschreibern, die mit Programmabblockungsschlüsselwörtern und/oder Beschreibern übereinstimmen, an der Kontakteinrichtung abzublocken.

34. Vorrichtung nach irgendeinem vorangehenden Anspruch, wobei ferner das Zusatzprogrammmaterial Werbematerial umfasst.

35. Vorrichtung nach irgendeinem der Ansprüche 1 bis 34, wobei die Programmempfangseinrichtung (304) eine Einrichtung zum Empfangen von Programmen über einen Satelliten und/oder eine terrestrische Antenne und/oder eine Kabelleitung und/oder ein Telefon umfasst.

36. Vorrichtung nach irgendeinem der Ansprüche 1 bis 35, wobei die Programme auf dem ersten Programmkanal digitale Musik/Audioprogramme umfassen.

37. Vorrichtung nach irgendeinem der Ansprüche 1 bis 35, wobei die Programme auf dem ersten Programmkanal Fernsehprogramme umfassen.

38. Vorrichtung nach Anspruch 37, wobei die Heimunterhaltungseinrichtung (74) ein Fernseher ist und die Vorrichtung eine Fernseher-Zusatzbox (television set top box) ist.

39. Vorrichtung nach Anspruch 37 oder 38, einschließlich einer Einrichtung zum Anzeigen einer elektronischen Programmführung.

40. Verfahren, um eine Heimunterhaltungseinrichtung (HED) (74) mit einem modifizierten Programmkanal zu versehen, wobei der modifizierte Programmkanal eine Planung von Programmen auf einem ersten Programmkanal umfasst, der modifizierte Teile innerhalb und/oder zwischen den Programmen aufweist, wobei das Verfahren das Ausrühren, lokal zu der HED, der folgenden Schritte umfasst:
Empfangen der Programme auf dem ersten Programmkanal;
Empfangen von Zusatzprogrammmaterial;
Bereitstellen der geplanten Programme an der Heimunterhaltungseinrichtung;
Erfassen eines Ereignisses in einem Programm; und
im Ansprechen auf die Programmereigniserfassung, Bereitstellen des Zusatzprogrammmaterials an der Heimunterhaltungseinrichtung,
wobei das Verfahren **gekennzeichnet ist durch** ein Empfangen des Zusatzprogrammmaterials von einer Quelle, die unterschiedlich zu dem ersten Programmkana ist.

41. Verfahren nach Anspruch 40, wobei das Ereignis eine Pause oder eine Unterbrechung in dem Programm ist.

42. Verfahren nach Anspruch 40 bis 41, ferner umfassend das Umschalten von dem ersten Programmkanal auf einen zweiten Kanal zum Empfangen des Zusatzprogrammmaterials.

43. Verfahren nach Anspruch 40 oder 41, ferner umfassend das Wählen von einer der beiden Programmempfangseinrichtungen, um das Zusatzprogrammmaterial bereitzustellen.

44. Verfahren nach irgendeinem der Ansprüche 40 bis 43, ferner umfassend das Zurückschalten von dem Zusatzprogrammmaterial auf den ersten Programmkanal.

45. Verfahren nach irgendeinem der Ansprüche 40 bis 44, umfassend das Wählen des Zusatzprogrammmaterials von Quellen einschließlich des lokal gespeicherten Programmmaterials.

46. Verfahren nach irgendeinem der Ansprüche 40 bis 44, umfassend das Wählen des Zusatzprogrammmaterials aus Quellen einschließlich eines nahezu Video-bei-Bedarf (near video on demand) Materials, eines Materials, das über das Internet verfügbar ist, und eines lokal gespeicherten Materials.

47. Verfahren nach Anspruch 40 oder 41, umfassend das Empfangen des Zusatzprogramms auf einem zweiten Kanal, der sich von dem ersten Kanal unterscheidet.

48. Verfahren nach irgendeinem der Ansprüche 40 bis 44, wobei die Quelle des Zusatzprogrammmaterials ein intern erzeugtes Video ist.

49. Verfahren nach Anspruch 48, wobei das Zusatzprogrammmaterial eine Programmplanungsinformation umfasst.

50. Verfahren nach irgendeinem der Ansprüche 40 bis 44, umfassend das Bereitstellen von Grafikinformation für eine Anzeige auf der Heimunterhaltungseinrichtung im Ansprechen auf die Programmereigniserfassung.

51. Verfahren nach Anspruch 50, umfassend das Bereitstellen einer Web-Seite für eine Anzeige auf der Heimunterhaltungseinrichtung im Ansprechen auf die Programmereigniserfassung.

52. Verfahren nach irgendeinem der Ansprüche 40 bis 51, wobei Ereignisse und Antworten auf die Ereignisse durch eine Information definiert werden, die zu Programmen auf dem ersten Programmkanal gehören.

53. Verfahren nach irgendeinem der Ansprüche 40 bis 51, wobei Ereignisse und Antworten auf die Ereignisse über eine On-Line-Verbindung empfangen werden.

54. Verfahren nach irgendeinem der Ansprüche 40 bis 43, wobei die Quelle des Zusatzprogrammmaterials durch eine Information definiert wird, die von einem Dienstanbieter bereitgestellt wird.

55. Verfahren nach irgendeinem der Ansprüche 40 bis 53, umfassend das Wählen der Quelle des Zusatzprogrammmaterials automatisch in Übereinstimmung mit einer verfügbaren Information.

56. Vorrichtung nach irgendeinem der Ansprüche 40 bis 55, umfassend das Überwachen von Ereignissen in einer Vielzahl von ankommenden Videoströmen zum Steuern der Bereitstellung des Zusatzprogrammmaterials.

57. Verfahren nach irgendeinem der Ansprüche 40 bis 56, ferner umfassend die folgenden Schritte:
Empfangen von Information, die einen Benutzer der Vorrichtung charakterisiert; und
Wählen der Quelle des Zusatzprogrammmaterials im Ansprechen auf die den Benutzer charakterisierende Information.

58. Verfahren nach Anspruch 57, wobei die den Benutzer charakterisierende Information eine Präferenzinformation ist, die bevorzugte Programme des einzelnen Benutzers charakterisiert.

59. Verfahren nach Anspruch 58, ferner umfassend das Versehen einer Heimunterhaltungseinrichtung mit einem persönlichen Kanal und wobei der modifizierte Programmkanal ein besagter persönlicher Kanal ist,
wobei der persönliche Kanal eine Planung von Programmen und entsprechenden Startzeiten umfasst, wobei die Programme aus Programmen, die aus einer Vielzahl von echten Kanälen und/oder anderen Programmquellen verfügbar sind, gewählt werden, wobei das Verfahren ferner die folgenden Schritte umfasst:
Empfangen einer Programminformation von einer Programmdatenbank (76), umfassend Programminformation für eine Vielzahl von Programmen, einschließlich, für jedes Programm, der Programmstartzeit, eines echten Kanals oder einer anderen Programmquelle, von dem/von der das Programm zu dieser Startzeit verfügbar ist, und Programmbeschreiberinformation, die den Inhalt des Programms charakterisiert;
Empfangen von Präferenzinformation, die bevorzugte Programme eines Benutzers charakterisiert, einschließlich einer Präferenzgewichtung für wenigstens einen einer Vielzahl von vorgegebenen Programmbeschreibern;
Arbeiten mit der Präferenzinformation und der Programmbeschreiberinformation, um eine Planungsinformation für einen persönlichen Kanal unter Verwendung der Programminformation automatisch zu erzeugen, wobei die Planungsinformation umfasst, für jedes geplante Programm, eine Programmstartzeitinformation und eine Information, die einen echten Kanal oder eine Programmquelle identifiziert, von dem/von der das Programm zu dieser Startzeit verfügbar ist;
Steuern einer Programmempfangseinrichtung (52, 56, 57, 60) unter Verwendung der persönlichen Kanalplanungsinformation zum Wählen und Empfangen, zu der geplanten Startzeit, des echten Kanals oder der Programmquelle, der/die dem geplanten Programm entspricht;
Bereitstellen von geplanten Programmen, die so empfangen werden, an der Heimunterhaltungseinrichtung derart, dass der Programmkanal durch einen Benutzer der Heimunterhaltungseinrichtung in einer ähnlichen Weise wie ein echter Programmkanal wählbar ist; und
Bestimmen der Quelle des Zusatzprogrammmaterials unter Verwendung der persönlichen Kanalplanung.

60. Verfahren nach Anspruch 59, ferner umfassend das Einstellen von Spalten und Überlappungen in der persönlichen Kanalplanung durch Einstellen der Startzeit von Video-bei-Bedarf Programmen.

61. Verfahren nach irgendeinem der Ansprüche 40 bis 60, umfassend das Empfangen der Programme auf dem ersten Programmkanal über eine Satellitenverbindung und/oder eine terrestrische Antenne und/oder eine Kabelverbindung und/oder eine Telefonverbindung.

62. Verfahren nach irgendeinem der Ansprüche 40 bis 61, wobei die Programme digitale Musik/Audioprogramme umfassen.

63. Verfahren nach irgendeinem der Ansprüche 40 bis 61, wobei die Programme Fernsehprogramme umfassen.

64. Verfahren nach Anspruch 63, wobei die Heimunterhaltungseinrichtung ein Fernseher ist und das Verfahren auf einer Zusatzbox ausgeführt wird.

65. Verfahren nach Anspruch 63 oder 64, ferner umfassend das Versehen der Heimunterhaltungseinrichtung mit einem elektronischen Programmführer.

66. Computerprogramm, um dann, wenn es abläuft, das Verfahren nach irgendeinem der Ansprüche 40 bis 66 auszuführen.

67. Computerprogramm nach Anspruch 66, gespeichert auf einem Medium, das von einem Computer lesbar ist.

## Revendications

1. Appareil pour réaliser un interfaçage avec un dispositif de loisir domestique (74) pour munir le dispositif de loisir domestique (HED) d'un canal de programme modifié,
le canal de programme modifié comprenant une planification de programmes sur un premier canal de programme, comportant des parties modifiées à l'intérieur des et/ou entre les programmes, l'appareil comprenant:
un premier dispositif de réception de programme (304) pour recevoir, de façon locale par rapport au HED, des programmes sur le premier canal de programme; et
un moyen (306, 308) pour recevoir, de façon locale par rapport au HED, un matériau de programme supplémentaire;
un moyen de sortie qui est couplé au premier dispositif de réception de programme ainsi qu'au moyen pour recevoir un matériau de programme supplémentaire, pour émettre en sortie les programmes planifiés et le matériau de programme supplémentaire sur le dispositif de loisir domestique;
un moyen de détection d'événement de programme (310), qui est couplé au dispositif de réception de programme, pour détecter un événement dans un programme; et
un moyen de commutation (316), qui est sensible au moyen de détection d'événement de programme, pour commuter la sortie depuis le programme sur le matériau de programme supplémentaire,
l'appareil étant **caractérisé en ce que** le moyen pour recevoir le matériau de programme supplémentaire comprend un moyen pour recevoir un matériau de programme supplémentaire depuis une source qui est différente du premier canal de programme.

2. Appareil selon la revendication 1, dans lequel l'événement est une rupture ou une interruption dans le programme.

3. Appareil selon la revendication 1 ou 2, dans lequel le moyen pour recevoir un matériau de programme supplémentaire comprend le dispositif de réception de programme et dans lequel le moyen de commutation commute le dispositif de réception de programme depuis le premier canal de programme sur un second canal pour recevoir le matériau de programme supplémentaire.

4. Appareil selon la revendication 1 ou 2, dans lequel le moyen pour recevoir un matériau de programme supplémentaire comprend un second dispositif de réception et dans lequel le moyen de commutation réalise une commutation de manière à coupler de façon sélective l'un des dispositifs de réception de programme sur le moyen de sortie.

5. Appareil selon l'une quelconque des revendications précédentes, dans lequel le moyen de commutation est en outre sensible à un dispositif de réception de programme pour commuter la sortie en retour depuis le matériau de programme supplémentaire sur le premier canal de programme.

6. Appareil selon l'une quelconque des revendications 1 à 5, comprenant en outre un moyen de stockage de matériau de programme local et dans lequel la source de matériau de programme supplémentaire peut être sélectionnée parmi des sources qui incluent un matériau de programme stocké localement.

7. Appareil selon l'une quelconque des revendications 1 à 5, dans lequel le moyen pour recevoir un matériau de programme supplémentaire inclut un moyen pour recevoir une vidéo proche d'une vidéo à la demande, une information en provenance de l'Internet et un matériau de programme stocké localement.

8. Appareil selon la revendication 1 ou 2, dans lequel le moyen pour recevoir un matériau de programme supplémentaire comprend un moyen pour recevoir un matériau à partir d'un second canal qui est différent du premier canal.

9. Appareil selon l'une quelconque des revendications 1 à 5, dans lequel le matériau de programme supplémentaire comprend une vidéo générée de façon interne.

10. Appareil selon la revendication 9, dans lequel le matériau de programme supplémentaire comprend une information de planification de programme.

11. Appareil selon l'une quelconque des revendications 1 à 5, dans lequel le moyen de détection d'événement commande l'affichage d'une information graphique sur le dispositif de loisir domestique.

12. Appareil selon la revendication 11, dans lequel le moyen de détection d'événement commande l'affichage d'une page web sur le dispositif de loisir domestique.

13. Appareil selon la revendication 12, dans lequel le moyen de détection d'événement commande l'affichage de la page web avec une vidéo image dans image ou incrustée.

14. Appareil selon l'une quelconque des revendications 1 à 13, dans lequel l'événement détecté est déterminé au moyen d'une valeur de temps absolu.

15. Appareil selon l'une quelconque des revendications 1 à 13, dans lequel l'événement détecté est déterminé au moyen d'une valeur de temps relatif.

16. Appareil selon l'une quelconque des revendications 1 à 15, dans lequel le moyen de commutation peut commuter la sortie en retour depuis le matériau de programme supplémentaire sur le programme après un intervalle temporel prédéterminé.

17. Appareil selon l'une quelconque des revendications 1 à 15; dans lequel le moyen de commutation peut commuter la sortie en retour depuis le matériau de programme supplémentaire sur le programme suite à la détection d'un événement dans un train vidéo du matériau de programme supplémentaire.

18. Appareil selon l'une quelconque des revendications 1 à 17, dans lequel les événements et la réponse de l'appareil aux évènements sont définis au moyen d'extensions par rapport à une information HTML comme associée à des programmes sur le premier canal de programme.

19. Appareil selon l'une quelconque des revendications 1 à 17, dans lequel les événements et la réponse de l'appareil aux événements sont transmis dans la bande sur le premier canal de programme ou dans un train vidéo numérique en tant que sous-titre ou en tant qu'objet d'événement séparé dans un carrousel de données du train vidéo numérique.

20. Appareil selon l'une quelconque des revendications 1 à 17, dans lequel les événements et la réponse de l'appareil aux événements sont entrés sur l'appareil via une connexion en ligne.

21. Appareil selon l'une quelconque des revendications 1 à 17, dans lequel le moyen de détection d'événement peut surveiller des événements dans une pluralité de trains vidéo arrivants afin de commander le moyen de commutation directement ou via un processeur (12).

22. Appareil selon l'une quelconque des revendications 1 à 21, dans lequel la source de matériau de programme supplémentaire est prédéfinie.

23. Appareil selon la revendication 22, dans lequel la source de matériau de programme supplémentaire est définie au moyen d'une microprogrammation dans l'appareil.

24. Appareil selon la revendication 22, dans lequel la source de matériau de programme supplémentaire est définie au moyen d'une information de définition de source qui est déchargée depuis un fournisseur de service sur l'appareil.

25. Appareil selon l'une quelconque des revendications 1 à 21, dans lequel la source de matériau de programme supplémentaire est sélectionnée de façon automatique par l'appareil conformément à une information qui est disponible pour l'appareil.

26. Appareil selon l'une quelconque des revendications précédentes, comprenant en outre:
un moyen d'entrée pour recevoir une information qui caractérise un utilisateur de l'appareil; et
un moyen pour sélectionner la source de matériau de programme supplémentaire en réponse à l'information de caractérisation d'utilisateur.

27. Appareil selon la revendication 26, dans lequel l'information de caractérisation d'utilisateur est une information de préférence qui caractérise des programmes préférés d'utilisateur individuels.

28. Appareil selon la revendication 27, comprenant en outre un moyen pour munir un dispositif de loisir domestique d'un canal personnel,
le canal personnel comprenant une planification de programmes et de temps de début correspondants, les programmes étant sélectionnés à partir de programmes qui sont disponibles sur une pluralité de canaux réels et/ou à partir d'autres sources de programme, l'appareil comprenant en outre:
un moyen d'interface de base de données (46) pour communiquer avec une base de données de programmes (76) comprenant une information de programme pour une pluralité de programmes, incluant, pour chaque programme, le temps de début de programme, un canal réel ou une autre source de programme, le programme étant disponible à partir de ce temps de début, et une information de descripteur de programme caractérisant le contenu du programme;
un moyen d'entrée (38, 40) pour recevoir l'information de préférence qui caractérise des programmes préférés d'utilisateur individuels;
un moyen de planification automatique (12) qui est couplé au moyen d'interface de base de données pour recevoir l'information de programme, pour opérer sur l'information de préférence et sur l'information de descripteur de programme de manière à générer automatiquement une information de planification pour un canal personnel pour l'utilisateur, l'information de planification comprenant, pour chaque programme planifié, une information de temps de début de programme et une information qui identifie un canal réel ou une autre source de programme à partir duquel ou de laquelle le programme est disponible à ce temps de début;
un moyen de commande (12) pour commander un dispositif de réception de programme en utilisant l'information de planification de canal personnel pour sélectionner et recevoir, au temps de début planifié, le canal réel ou la source de programme correspondant au programme planifié;
un moyen de sortie (72) pour appliquer des programmes planifiés ainsi reçus sur le dispositif de loisir domestique de telle sorte que le canal personnel puisse être sélectionné par un utilisateur du dispositif de loisir domestique de façon. similaire à un canal de programme réel; et
une interface utilisateur (40, 74) pour une entrée utilisateur de l'information de préférence, l'interface utilisateur étant configurée pour permettre à un utilisateur d'entrer une pondération de préférence pour chacun d'une pluralité de descripteurs de programme prédéterminés, et comprenant en outre un moyen d'affichage pour afficher une planification de canal personnel correspondant aux préférences d'utilisateur et ainsi, l'utilisateur peut définir de façon interactive un canal personnel, et dans lequel la source de matériau de programme supplémentaire est déterminée par la planification de canal personnel.

29. Appareil selon la revendication 28, dans lequel des espaces et des chevauchements dans la planification de canal personnel sont réglés en réglant le temps de début de programmes de vidéo à la demande dans la planification.

30. Appareil selon la revendication 28 ou 29, dans lequel un descripteur de programme prédéterminé comprend un jeu de mots clés, et comprenant en outre un moyen pour décharger un jeu de mots clés sur l'appareil.

31. Appareil selon la revendication 30, dans lequel l'interface utilisateur comprend en outre un moyen pour qu'un utilisateur définisse un descripteur de programme et/ou un mot clé.

32. Appareil selon l'une quelconque des revendications 28 à 31, comprenant en outre un moyen d'entrée de profil d'utilisateur pour définir une pluralité de descripteurs de profil d'utilisateur et dans lequel les descripteurs de profil d'utilisateur modifient les poids des descripteurs de programme.

33. Appareil selon la revendication 32, dans lequel le moyen d'entrée de profil d'utilisateur comprend un moyen à accès commandé pour bloquer la fourniture, sur le moyen de contact, de programmes avec des mots clés ou des descripteurs correspondant à des mots clés de blocage de programme ou à des descripteurs de blocage de programme.

34. Appareil selon l'une quelconque des revendications précédentes, dans lequel en outre le matériau de programme supplémentaire comprend un matériau publicitaire.

35. Appareil selon l'une quelconque des revendications 1 à 34, dans lequel le dispositif de réception de programme (304) comprend un moyen pour recevoir des programmes via un élément ou plusieurs éléments pris parmi un satellite, une voie aérienne terrestre, une ligne de câble et un téléphone.

36. Appareil selon l'une quelconque des revendications 1 à 35, dans lequel les programmes sur le premier canal de programme comprennent des programmes de musique/audio numériques.

37. Appareil selon l'une quelconque des revendications 1 à 35, dans lequel les programmes sur le premier canal de programme comprennent des programmes de télévision.

38. Appareil selon la revendication 37, dans lequel le dispositif de loisir domestique (74) est une télévision et l'appareil est un boîtier de décodeur de télévision.

39. Appareil selon la revendication 37 ou 38, incluant un moyen pour afficher un guide de programme électronique.

40. Procédé consistant à munir un dispositif de loisir domestique (HED) (74) d'un canal de programme modifié, le canal de programme modifié comprenant une planification de programmes sur un premier canal de programme, comportant des parties modifiées à l'intérieur des et/ou entre les programmes, le procédé comprenant la réalisation, de façon locale par rapport au HED, des étapes de:
réception des programmes sur le premier canal de programme;
réception d'un matériau de programme supplémentaire;
application des programmes planifiés sur le dispositif de loisir domestique;
détection d'un événement dans un programme; et
en réponse à la détection d'événement de programme, application du matériau de programme supplémentaire sur le dispositif de loisir domestique,
le procédé étant **caractérisé en ce qu'**il reçoit le matériau de programme supplémentaire depuis une source qui est différente du premier canal de programme.

41. Procédé selon la revendication 40, dans lequel l'événement est une rupture ou une interruption dans le programme.

42. Procédé selon la revendication 40 ou 41, comprenant en outre la commutation depuis le premier canal de programme sur un second canal pour recevoir le matériau de programme supplémentaire.

43. Procédé selon la revendication 40 ou 41, comprenant en outre la sélection de l'un de deux dispositifs de réception de programme pour appliquer le matériau de programme supplémentaire.

44. Procédé selon l'une quelconque des revendications 40 à 43, comprenant en outre une commutation en retour depuis le matériau de programme supplémentaire sur le premier canal de programme.

45. Procédé selon l'une quelconque des revendications 40 à 44, comprenant la sélection du matériau de programme supplémentaire à partir de sources incluant un matériau de programme stocké localement.

46. Procédé selon l'une quelconque des revendications 40 à 44, comprenant la sélection du matériau de programme supplémentaire à partir de sources incluant un matériau proche d'une vidéo à la demande, un matériau disponible via l'Internet et un matériau stocké localement.

47. Procédé selon la revendication 40 ou 41, comprenant la réception du programme supplémentaire sur un second canal qui est différent du premier canal.

48. Procédé selon l'une quelconque des revendications 40 à 44, dans lequel la source de matériau de programme supplémentaire est une vidéo générée de façon interne.

49. Procédé selon la revendication 48, dans lequel le matériau de programme supplémentaire inclut une information de planification de programme.

50. Procédé selon l'une quelconque des revendications 40 à 44, comprenant la fourniture d'une information graphique pour un affichage sur le dispositif de loisir domestique en réponse à la détection d'événement de programme.

51. Procédé selon la revendication 50, comprenant la fourniture d'une page web pour un affichage sur le dispositif de loisir domestique en réponse à la détection d'événement de programme.

52. Procédé selon l'une quelconque des revendications 40 à 51, dans lequel des événements et des réponses aux événements sont définis par une information qui est associée à des programmes sur le premier canal de programme.

53. Procédé selon l'une quelconque des revendications 40 à 51, dans lequel des événements et des réponses aux événements sont reçus via une connexion en ligne.

54. Procédé selon l'une quelconque des revendications 40 à 53, dans lequel la source de matériau de programme supplémentaire est définie par une information qui est appliquée depuis un fournisseur de service.

55. Procédé selon l'une quelconque des revendications 40 à 53, comprenant la sélection de la source de matériau de programme supplémentaire de manière automatique conformément à une information disponible.

56. Procédé selon l'une quelconque des revendications 40 à 55, comprenant la surveillance d'événements dans une pluralité de trains vidéo arrivants pour commander la fourniture du matériau de programme supplémentaire.

57. Procédé selon l'une quelconque des revendications 40 à 56, comprenant en outre:
la réception d'une information qui caractérise un utilisateur de l'appareil; et
la sélection de la source de matériau de programme supplémentaire en réponse à l'information de caractérisation d'utilisateur.

58. Procédé selon la revendication 57, dans lequel l'information de caractérisation d'utilisateur est une information de préférence qui caractérise des programmes préférés d'utilisateur individuels.

59. Procédé selon la revendication 58, comprenant en outre le fait de munir un dispositif de loisir domestique d'un canal personnel et dans lequel le canal de programme modifié est un dit canal personnel,
le canal personnel comprenant une planification de programmes et de temps de début correspondants, les programmes étant sélectionnés à partir de programmes disponibles sur une pluralité de canaux réels et/ou d'autres sources de programme, le procédé comprenant en outre:
la réception d'une information de programme depuis une base de données de programmes (76) comprenant une information de programme pour une pluralité de programmes, incluant, pour chaque programme, le temps de début de programme, un canal réel ou une autre source de programme depuis lequel ou depuis laquelle le programme est disponible à partir de ce temps de début, et une information de descripteur de programme qui caractérise le contenu du programme;
la réception d'une information de préférence qui caractérise des programmes préférés d'utilisateur incluant une pondération de préférence pour au moins l'un d'une pluralité de descripteurs de programme prédéterminés;
le fait d'opérer sur l'information de préférence et sur l'information de descripteur de programme de manière à générer automatiquement une information de planification pour un canal personnel en utilisant l'information de programme, l'information de planification comprenant, pour chaque programme planifié, une information de temps de début de programme et une information qui identifie un canal réel ou une source de programme à partir duquel ou de laquelle le programme est disponible à ce temps de début;
la commande d'un dispositif de réception de programme (52, 56, 57, 60) en utilisant l'information de planification de canal personnel pour sélectionner et recevoir, au temps de début planifié, le canal réel ou la source de programme correspondant au programme planifié;
l'application de programmes planifiés ainsi reçus sur le dispositif de loisir domestique de telle sorte que le canal personnel puisse être sélectionné par un utilisateur du dispositif de loisir domestique d'une façon similaire à un canal de programme réel; et
la détermination de la source de matériau de programme supplémentaire en utilisant la planification de canal personnel.

60. Procédé selon la revendication 59, comprenant en outre le réglage d'espaces et de chevauchements dans la planification de canal personnel en réglant le. temps de début de programmes de vidéo à la demande.

61. Procédé selon l'une quelconque des revendications 40 à 60, comprenant la réception des programmes sur le premier canal de programme via un élément ou plusieurs éléments pris parmi une liaison satellite, une liaison aérienne terrestre, une liaison par câble et une liaison téléphonique.

62. Procédé selon l'une quelconque des revendications 40 à 61, dans lequel les programmes comprennent des programmes de musique/audio numériques.

63. Procédé selon l'une quelconque des revendications 40 à 61, dans lequel les programmes comprennent des programmes de télévision.

64. Procédé selon la revendication 63, dans lequel le dispositif de loisir domestique est une télévision et le procédé est réalisé sur un boîtier de décodeur.

65. Procédé selon la revendication 63 ou 64, comprenant en outre le fait de munir le dispositif de loisir domestique d'un guide de programme électronique.

66. Programme d'ordinateur permettant de réaliser, lorsqu'il est déroulé, le procédé selon l'une quelconque des revendications 40 à 66.

67. Programme d'ordinateur selon la revendication 66, stocké sur un support lisible par ordinateur.
